# EUROPÄISCHE PATENTANMELDUNG

(11) **EP 1 666 184 A1**
(43) Veröffentlichungstag der Anmeldung: **07.06.2006**
(21) Anmeldenummer: 05022964.0
(22) Anmeldetag: 21.10.2005
(51) Int. Cl.: B23K 11/24, H02J 3/02

(54) **Energieversorgung für Widerstandsschweissanlagen**

(30) Priorität: 04.12.2004 DE 102004058614
(71) Anmelder: Bosch Rexroth AG, 70184 Stuttgart (DE)
(72) Erfinder: Stellwag, Dieter, 64711 Erbach (DE); Klinger, Thomas, 64747 Breuberg (DE)

(57) **Zusammenfassung**

Vorrichtung zum Widerstandsschweißen 9 mit Schweißzangengehäuse, Schweißtransformator 4, Schweißzange 7, Schweißzangenantrieb 6 zur Betätigung der Schweißzange 7 und Energieversorgung 1, 2, 3, 5 mittels alternierender Versorgungsspannung, welche möglichst klein baut und einfach erweitert werden kann, wobei die Energieversorgung 1, 2, 3, 5 mittels eines Hauptumformers 1 und mittels Antriebs- und Schweißumformer 2, 3 realisiert ist, wobei der Ausgang des Hauptumformers 1 mit den Eingängen der Antriebs- und Schweißumformer 2, 3 verbunden ist, wobei die Eingänge der Antriebs- und Schweißumformer 2, 3 untereinander verbunden sind und die Verbindung mittels eines Wechselspannungszwischenkreises 5 realisiert ist.

## Beschreibung

Die Erfindung entspringt dem Gebiet der Widerstandsschweißtechnik und beschreibt eine entsprechende Vorrichtung gemäß dem Oberbegriff des Anspruches 1.

Der in der Offenlegungsschrift DE 101 14 323 A1 (Figur 3) gezeigte hierarchische Aufbau einer Vorrichtung zum Widerstandsschweißen stellt den nächstliegenden Stand der Technik dar. Mittels eines gleichgerichteten, dreiphasigen Drehstromnetzes werden Wechselspannungen unterschiedlicher Phase und Frequenz für die Energieversorgung der Schweißzange und der Antriebe erzeugt. Dabei liefert der Schweißwechselrichter eine zweiphasige Ausgangsspannung und der Antriebswechselrichter eine dreiphasige Ausgangsspannung.

Dieses Konzept ist sinnvoll zur Versorgung von Komponenten innerhalb eines einzigen Gerätes, nicht jedoch zur Überbrückung größerer Entfernungen und zur Versorgung mehrerer autarker Widerstandsschweißsysteme, z.B. Schweißroboter innerhalb einer Fertigungsstraße in der Automobilindustrie. Außerdem ist zur Erzeugung des Schweißstromes hier eine erneute Wechselrichtung mittels einer relativ komplexen Schaltungsanordnung erforderlich. Dies bringt einen größeren Platzbedarf mit sich.

Die Aufgabe der Erfindung ist es in erster Linie ein Konzept zu finden, welches die Realisierung möglichst klein bauender Widerstandsschweißvorrichtungen ermöglicht und eine einfache Erweiterung je nach Anwendungsfall zulässt.

Diese Aufgabe wird erfindungsgemäß dadurch gelöst, dass die Energieversorgung einer eingangs erwähnten Vorrichtung mittels eines Hauptumformers und zumindest eines Nebenumformers realisiert ist und alle Umformer miteinander verbunden sind, wobei diese Verbindung mittels eines Wechselspannungszwischenkreises realisiert ist.

Mit anderen Worten ausgedrückt versorgt ein zentraler Hauptumformer mehrere Nebenumformer mit Energie mittels eines Wechselspannungszwischenkreises mit üblicherweise konstanter Frequenz. Der Platzbedarf zur Unterbringung der Energieversorgung wird damit örtlich separat allokiert. Damit können einzelne Komponenten der Vorrichtung kleiner gebaut werden als üblich.

Es besteht außerdem die Möglichkeit die Nebenumformer dezentral zu organisieren und den Hauptumformer zentral zu organisieren, da die Umformer mittels des Wechselspannungszwischenkreises auch innerhalb größerer Entfernungen (bis ca. 100 Meter) miteinander verbunden werden können. Das bedeutet wiederum, dass die Nebenumformer in unmittelbarer Nähe der an sie angeschlossenen Lasten - wie bspw. eine Schweißzange oder ein Motor des Schweißzangenantriebes - angeordnet werden können. Dies erhöht den Freiheitsgrad beim Systemdesign, ermöglicht ein modulares Konzept mit erhöhter Integrationsmöglichkeit und vereinfacht die Erweiterbarkeit einer Widerstandsschweißanlage. Sofern die oben erwähnte Fertigungsstraße erweitert werden müsste, wäre dies einfach machbar, indem lediglich an den Hauptumformer mittels des Wechselspannungszwischenkreises weitere Nebenumformer angeschaltet werden. Der Hauptumformer versorgt dann die neu hinzugekommene Widerstandsschweißvorrichtung ebenfalls mit Energie. Das Verbindungsnetz (Wechselspannungszwischenkreis) zwischen Hauptumformer und Nebenumformer kann mittels einer Sterntopologie realisiert werden, da alle Eingänge der Nebenumformer mit dem Ausgang des Hauptumformers verbunden sind. Daraus folgt dann auch, dass alle Eingänge der Nebenumformer automatisch untereinander verbunden sind.

Vorteilhafterweise wird ein Nebenumformer als Antriebsumformer einem elektrischen Antrieb, zum Beispiel einem Schweißzangenantrieb, zugeordnet und ein Nebenumformer als Schweißumformer einer Schweißzange zugeordnet. Auch ist die Anwendung des erfindungsgemäßen Prinzips für Widerstandsschweißanlagen vorgesehen, die mittels eines pneumatischen/hydraulischen Schweißzangenantriebes arbeiten. Dann stellen die Nebenumformer lediglich Schweißumformer und keine Antriebsumformer dar. Auch Mischformen, also am Wechselspannungszwischenkreis betriebene Widerstandsschweißanlagen mit pneumatischen/hydraulischen und/oder elektrischen Schweißzangenantrieben sind ohne weiteres realisierbar. Im Wesentlichen entfällt damit im Vergleich zum Stand der Technik die zur Erzeugung des Schweißstromes erforderliche Wechselrichtung des aus einem geräteinternen und übergeordneten Gleichspannungszwischenkreis bezogenen Stromes, da einem Schweißtransformator bzw. einem Schweißumformer unmittelbar die vom Wechselspannungszwischenkreis stammende Wechselspannung zugeführt werden kann. Die Aufgabe des Antriebsumformers - sofern der Antrieb nicht alternativ pneumatisch/hydraulisch erfolgt - ist es, eine Energieversorgung für einen angeschlossenen Servomotor zu gewährleisten, welcher die Schweißzangen betätigt.

Vorzugsweise bewirken der Hauptumformer und der Antriebsumformer eine Umformung ihrer Eingangsspannungen bzw. Eingangsströme bezüglich der Phase und/oder der Frequenz, wohingegen der dezentrale Schweißumformer in erster Linie eine Lastleistungsregulierung bewirkt. Hierdurch lassen sich je nach Anwendungsfall und verwendeten Systemkomponenten flexibel die erforderlichen Randbedingungen (Anzahl der Schweißzangen etc.) zur Ausführung eines Anwendungsprozesses schaffen. So könnte beispielsweise ein zweiphasiger Wechselspannungszwischenkreis zur Energieverteilung genutzt werden, während das eigentliche Versorgungsnetz dreiphasig ausgelegt ist. Der Antriebsumformer liefert in der Regel eine variable Ausgangsfrequenz bei fester Phasenanzahl, um die Drehzahl des angeschlossenen Servomotors variieren zu können. Die Frequenz der Ausgangsspannung des Hauptumformers ist dagegen in der Regel konstant, ebenso die Anzahl der Phasen.

Besonders bevorzugt wird die Lastleistungsregulierung eines Schweißumformers mittels einer Phasenanschnittsteuerung realisiert. Diese Phasenanschnittsteuerung kann mit relativ geringem Aufwand mittels antiparallel geschalteter Thyristoren (oder eines Triacs) realisiert werden, ist somit kostengünstig und benötigt wenig Raum zur Unterbringung. Damit wird auch eine Reduzierung der Baugröße bewirkt. Alternativ kann in bekannter Weise mittels IGBTs in H-Brückenschaltung eine Realisierung erfolgen.

Besonders bevorzugt umfasst das Schweißzangengehäuse und/oder das Schweißtransformatorgehäuse die dezentralen Antriebs- und/oder Schweißumformer und/oder eine Schweißsteuerung. Der Hauptumformer erzeugt die Versorgungsspannung für mehrere Schweißzangen, welche die Antriebs- und/oder Schweißumformer entweder innerhalb ihres Gehäuses und/oder innerhalb des ebenfalls vom Schweißzangengehäuse umfassten Schweißtransformatorgehäuses beherbergen. Der Hauptumformer ist dabei an einer zentralen Stelle, beispielsweise innerhalb einer Fertigungshalle angeordnet, während die Antriebs- und/oder Schweißumformer dezentral in unmittelbarer Nähe der Schweißvorrichtungen platziert sind. Im Falle der Integration des Schweißumformers in das Schweißtransformatorgehäuse, erhält man eine teilweise integrierte Energieversorgung, welche zur primärseitigen Versorgung eines Transformators dient und ggf. in Verbindung mit einem Gleichrichter den Schweißstrom liefert. Somit würde die Kombination aus einem wassergekühlten Transformator mit/ohne Gleichrichter zusammen mit dem Schweißumformer eine kompakte, autarke Einheit bilden, die ggf. auch in anderen Anwendungen Verwendung finden würde oder auch auf andere Technologien übertragbar wäre.

Ganz besonders bevorzugt umfasst ein Schweißzangenantrieb mehrere Antriebe, wobei jeder Antrieb wiederum einen separaten Antriebsumformer umfasst oder der Schweißzangenantrieb mehrere Antriebe umfasst, wobei jeder Antrieb einen separaten Antriebsumformer umfasst, wobei die Antriebsumformer jedoch einen gemeinsamen Gleichspannungszwischenkreis nutzen. Im letzteren Fall kann wiederum Bauvolumen eingespart werden, weil erheblich weniger Pufferkapazität in Form von Kondensatoren erforderlich wird.

Vorteilhafterweise wird die vom Hauptumformer aufzubringende Summenleistung für die mit dem Antriebs- und/oder Schweißumformer verbundenen Verbraucher im zentralen Hauptumformer und/oder in der Schweißsteuerung überwacht. Falls die Schweißsteuerung dezentral angeordnet ist (z.B. an der Schweißzange oder in der Robotersteuerung) erfolgt die Überwachung der Summenleistung im Hauptumformer selbst. Es wäre jedoch auch denkbar, eine zentrale Schweißsteuerung für die Ansteuerung mehrerer am zentralen Hauptumformer angeschlossene Schweißzangen direkt im Hauptumformer zu integrieren. In diesem Fall würde es Sinn machen die Summenleistung von der Schweißsteuerung überwachen zu lassen, da diese die erforderliche Rechenkapazität und Logikanalyse ohne erwähnenswerten Zusatzaufwand zur Verfügung stellen könnte. Die Integration der Schweißsteuerung in den Hauptumformer ist jedoch nicht zwingend, denn die Steuerung könnte auch völlig unabhängig vom Hauptumformer untergebracht sein.

Besonders geeignet für eine solche Überwachung ist eine Summenleistungsbegrenzungssteuerung, wobei die Lasten nach Maßgabe einer Verwaltungsvorschrift so für den Betrieb verwaltet werden, dass die angeforderte Leistung aller am Hauptumformer angeschalteten Lasten in Summe die zulässige Summenleistung bzw. Spitzenlast, welche der Hauptumformer liefern kann, praktisch nicht überschreitet.

Es wird sinnvollerweise nur die von der Lastleistungsregulierung (Schweißstromsteller) an den Schweißtransformator gelieferte Leistung bei der Summenleistungsüberwachung registriert, da sie den Großteil der angeforderten Leistung (ca. 90%) darstellt und die von den Antrieben angeforderte Leistung dagegen vernachlässigbar ist. Die von der Schweißzange verbrauchte Leistung wird auch immer nur kurzzeitig für eine Dauer von ca. 100 bis 300 ms angefordert, während die Zangenantriebe länger bzw. ständig im Eingriff stehen und eine feste Grundlast darstellen.

Man könnte durchgängig Trafos einheitlicher Leistung einsetzten, so dass eine maximal mögliche Leistung N je Schweißplatz veranschlagt werden kann und die Summenleistung aller gemeinsam gleichzeitig aktiver Schweißplätze - wie man leicht erkennt - einfachst berechenbar ist. Ist zum Beispiel der Hauptumformer für eine Leistung entsprechend 5xN ausgelegt und sind 10 Schweißzangen mit einer Gesamtleistungsaufnahme von beispielsweise maximal 10xN im Einsatz, so soll die Überwachungslogik verhindern, dass mehr als 5 Lastleistungsregulierungen gleichzeitig aktiv werden und Leistung anfordern.

Mittels einer Summenleistungsüberwachung wird ermittelt, wieviel Leistung bereits benötigt wird bzw. wieviele Verbraucher bereits gleichzeitig aktiv sind und ob eine zusätzliche Leistungsaufnahme von weiteren Verbraucher noch möglich ist. Sollte dies der Fall sein, so gibt die Logik den Start für die Stromzeit zur Beaufschlagung der Schweißzange mit Schweißstrom bzw. einen anderen Verbraucher frei. Falls nein, wird der Start so lange verzögert, bis eine andere Komponente Stromzeitende meldet.

Es wäre auch denkbar die erforderliche Momentanleistung zur Erzeugung eines einzigen Schweißpunktes als Kriterium anzusetzen, um die Überwachung der Summenleistung zu realisieren. Hierbei würde dann nicht die theoretische Maximalleistungsaufnahme einer Schweißzange pauschal für die Verwaltung der Summenleistung veranschlagt, sondern der Schweißumformer meldet an dem Hauptumformer den' für den bevorstehenden Schweißvorgang erforderlichen Schweißstrom für jeden Schweißvorgang separat. Die Summenleistungsüberwachung ermittelt anschließend, ob eine Freigabe aufgrund der momentanen Auslastung möglich ist oder nicht. Die Freigabe der Stromzeiten erfolgt entweder in der Reihenfolge der Anfragen oder mittels Prioritätsvergabe. Somit ergibt sich eine einfache, aber wirkungsvolle Summenleistungsbegrenzungssteuerung in Verbindung mit der Energieversorgung für Widerstandsschweißsysteme.

Es wird demnach vor allem bei Verwendung einer Vielzahl von Schweißumformern, deren Summenleistung deutlich höher sein kann als die vom Hauptumformer lieferbare Maximalleistung, gezielt die für Schweißvorgänge erforderliche Stromzeit der Schweißzangen mittels einer Freigabelogik bzw. Freigabesteuerung beeinflusst.

Besonders bevorzugt umfasst der Hauptumformer Entstörmittel zur Vermeidung von Oberwellen. Somit kann eine Entstörung zentral erfolgen und Entstörmittel für jeden einzelnen Nebenumformer eingespart werden. Es wird demnach bestenfalls nur ein einziges Entstörmittel erforderlich. Diese Maßnahme spart Bauvolumen und Kosten ein. Die Entstörmittel können beispielsweise mittels Drosseln und/oder Kondensatoren und/oder Widerständen realisiert sein.

Vorteilhafterweise umfasst ein Roboter eine erfindungsgemäße Widerstandsschweißvorrichtung. Die Widerstandsschweißvorrichtung umfasst wiederum alle für eine Schweißaufgabe erforderlichen Komponenten wie Schweißumformer, Antriebsumformer, etc.. Die Widerstandsschweißvorrichtung bildet damit eine in Ihrer Funktion abgeschlossene Einheit, die bestenfalls nur noch einen Energieversorgungsanschluss und einen Steueranschluss aufweist, wobei die Vorteile im geringen Bauvolumen und reduzierten Gewicht liegen. Dezentral organisierte Schweißroboter müssen folglich weniger Gewicht handhaben, was die mechanische Trägheit des Roboterarmes reduzieren kann und zahlreiche weitere positive Auswirkungen für den Roboterbetrieb hat.

### Bezugszeichenliste

- 1.: Hauptumformer
- 2: Antriebsumformer
- 3: Schweißumformer
- 4: Schweißtransformator mit Gleichrichter
- 5: Wechselspannungszwischenkreis
- 6: Schweißzangenmotoren
- 7: Schweißzange
- 8: Widerstandsschweißvorrichtungen
- 9: Widerstandsschweißsystem mit modularer Energieversorgung

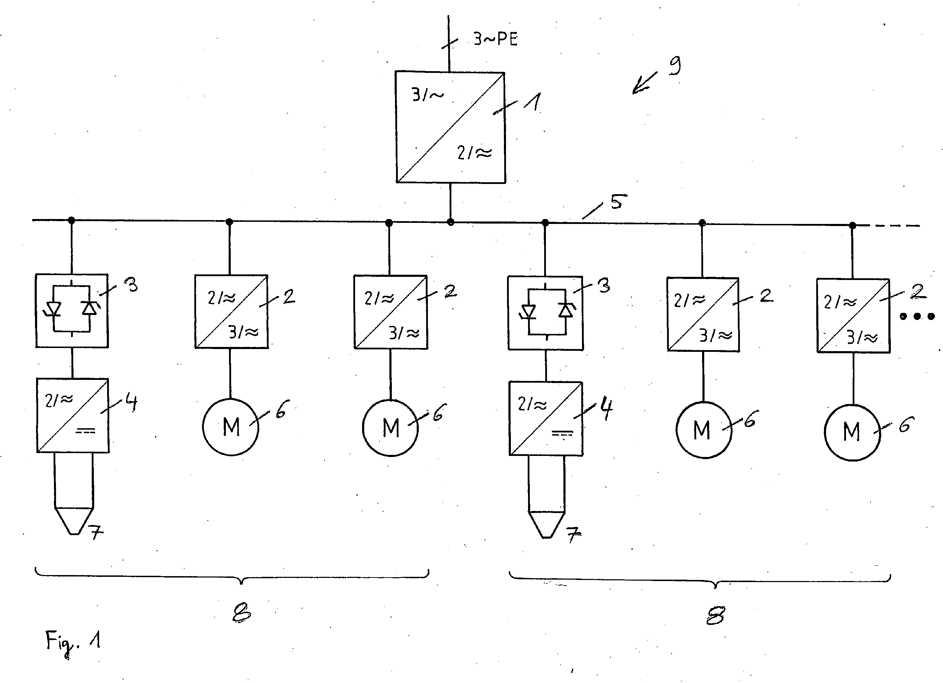

Mittels Figur 1 soll die Erfindung anhand einer konkreten Ausgestaltungsform schematisch kurz beschrieben werden. Figur 1 zeigt einen Hauptumformer 1, einen Antriebsumformer 2, einen Schweißumformer 3, Schweißtransformatoren mit Gleichrichter 4, einen Wechselspannungszwischenkreis 5, Schweißzangenmotoren 6, Schweißzangen 7, zwei von den Komponenten 3, 4, 7, 2, 6 gebildete Widerstandsschweißvorrichtungen 8 bzw. ein alles umfassendes Widerstandsschweißsystem mit modularer Energieversorgung 9. Jede Widerstandsschweißvorrichtung 8 umfasst in der Regel noch ihre eigene dezentral angebrachte Schweißsteuerung. Diese ist jedoch hier aus Gründen der Übersichtlichkeit nicht gezeigt.

Der Hauptumformer 1 arbeitet in diesem Beispiel mit einer dreiphasigen Wechselspannung mit 50/60 Hz (DE/USA) Netzfrequenz an seinem Eingang. Er wandelt diese dreiphasige Wechselspannung in eine zweiphasige Wechselspannung mit einer Zwischenkreisnetzfrequenz um 1 kHz. Diese Zwischenkreisnetzfrequenz um 1 kHz ist jedoch keinesfalls zwingend. Üblicherweise wird die Zwischenkreisnetzfrequenz am Ausgang des Hauptumformers 1 jedoch zwischen 1 kHz und 10 kHz und damit deutlich höher als die Netzfrequenz am Eingang des Hauptumformers liegen. Da der Ausgang des Hauptumformers 1 mit dem Wechselspannungszwischenkreis 5 verbunden ist, bietet sich hier die Verwendung eines Wechselspannungszwischenkreises 5 mit zwei Phasen an, dessen Wechselspannungsfrequenz 1 kHz beträgt.

Die Antriebsumformer 2, deren Eingänge ebenfalls mit dem Wechselspannungszwischenkreis 5 verbunden sind, wandeln die zweiphasige Wechselspannung mit 1 kHz Zwischenkreisnetzfrequenz in eine dreiphasige Wechselspannung mit variabler Frequenz um. Diese dreiphasige Wechselspannung mit variabler Frequenz steht am Ausgang des Antriebsumformers 2 zur Versorgung des Servomotors 6 zur Verfügung. Mittels dieser variablen Frequenz lässt sich der Motor bezüglich seiner Drehzahl verändern.

Der hier als Wechselstromsteller konzipierte Schweißumformer 3 arbeitet mittels zweier antiparallel geschalteter Thyristoren zur Phasenanschnittsteuerung, wie in der Widerstandsschweißtechnik bei Wechselstromanlage (Prinzip eines Lichtdimmers als Leistungsregulierer) zur Regulierung des Schweißstromes üblich. Der Eingang des Schweißumformer 3 ist ebenfalls mit dem Wechselspannungszwischenkreis 5 verbunden. Der Ausgang des Schweißumformers 3 liefert einen in der Phase unveränderten zweiphasigen Wechselstrom, welcher nach Maßgabe der Phasenanschnittsteuerung im Schweißumrichter 3 eine regulierbare Leistungszufuhr zur Schweißzange 7 zulässt. Bevor der Schweißstrom allerdings in die Schweißzange 7 eingeleitet wird, erfolgt sinnvollerweise eine Gleichrichtung mittels der Schweißtransformator/Gleichrichterkombination 4. Es bietet sich an, den Schweißumformer 3 direkt in die Schweißtransformator/Gleichrichterkombination 4 zu integrieren, so dass die Komponente 3 noch von der Komponente 4 umfasst ist.

Am Wechselspannungszwischenkreis 5 kann theoretisch eine beliebige Anzahl von Schweißvorrichtungen 8 betrieben werden. Der Wechselspannüngszwischenkreis 5 ermöglicht außerdem die Überbrückung größerer Entfernungen, so dass auch mehr oder weniger weit voneinander beabstandete Schweißvorrichtungen 8 mittels eines Hauptumformers 1 betrieben werden können. In der Praxis ist selbstverständlich unter anderem die maximal zulässige Netzlast bzw. die maximal vom Hauptumformer 1 lieferbare Leistung ein begrenzender Faktor. Sollen daher mehrere Schweißvorrichtungen 8 an einem Hauptumformer 1 betrieben werden, so muss dieser Hauptumformer entsprechend leistungsstark ausgelegt und ggf. mit einer Summenlastbegrenzugssteuerung (in Figur 1 nicht gezeigt) ausgestattet werden.

Die Komponenten 3, 4, 2, 6 und 7 einer Widerstandsschweißvorrichtung 8 sind vorteilhafterweise vollständig oder teilweise in das Schweißzangengehäuse integriert, so dass ein Teil der erforderlichen und aufgrund des erfindungsgemäßen Prinzips nun modular und flexibel aufgebauten Energieversorgung 1, 5, 3, 2 unmittelbar und am Ort der Last platziert werden kann.

Vorteilhafterweise nutzen die Antriebsumformer 2 für die Servozangenmotoren 6 einen gemeinsamen Gleichspannungszwischenkreis, so dass für beide Motoren 6 nur ein Abgriff am Wechselspannungszwischenkreis 5 erforderlich ist, wobei aus der zweiphasigen Wechselspannung des Wechselspannungszwischenkreises 5 eine mittels einer Pufferkapazität stabilisierte Gleichspannung erzeugt wird, und diese Gleichspannung wiederum in eine für jeden Motor 6 separate dreiphasige Wechselspannung mit variabler Frequenz umgeformt wird. Man bewirkt damit eine Raum- und eine Materialersparnis für einen andernfalls erforderlichen redundanten Gleichspannungszwischenkreis.

## Patentansprüche

1. Widerstandsschweißvorrichtung mit Energieversorgung, **dadurch gekennzeichnet, dass** die Energieversorgung mittels eines Hauptumformers (1) und zumindest eines Nebeniunformers (2, 3) realisiert ist und alle Umformer (1, 2, 3) miteinander verbunden sind, wobei diese Verbindung mittels eines Wechselspannungszwischenkreises (5) realisiert ist.

2. Vorrichtung nach Anspruch 1, **dadurch gekennzeichnet, dass** ein Nebenumformer (2) als Antriebsumformer einem elektrischen Antrieb zugeordnet ist und ein Nebenumformer (3) als Schweißumformer einer Schweißzange zugeordnet ist.

3. Vorrichtung nach Anspruch 2, **dadurch gekennzeichnet, dass** Hauptumformer (1) und Antriebsumformer (2) eine Umformung der Eingangsspannung bezüglich der Phase und/oder der Frequenz und Schweißumformer eine Lastleistungsregulierung umfassen.

4. Vorrichtung nach Anspruch 3, **dadurch gekennzeichnet, dass** die Lastleistungsregulierung mittels einer Phasenanschnittsteuerung realisiert ist.

5. Vorrichtung nach einem der vorhergehenden Ansprüche 2 bis 4, **dadurch gekennzeichnet, dass** ein Schweißzangengehäuse und/oder ein Schweißtransformatorgehäuse (4) Antriebs- und/oder Schweißumformer (2, 3) und/oder eine Schweißsteuerung umfasst.

6. Vorrichtung nach einem der vorhergehenden Ansprüche 2 bis 5 , **dadurch gekennzeichnet, dass** ein Schweißzangenantrieb zumindest zwei elektrische Antriebe (6) umfasst, wobei jeder Antrieb (6) wiederum einen separaten Antriebsumformer umfasst oder der Schweißzangenantrieb zumindest zwei elektrische Antriebe (6) umfasst, wobei jeder Antrieb einen separaten Antriebsumformer umfasst, wobei die Antriebsumformer einen gemeinsamen Gleichspannungszwischenkreis nutzen.

7. Vorrichtung nach einem der vorhergehenden Ansprüche 2 bis 6, **dadurch gekennzeichnet, dass** die vom Hauptumformer (1) aufzubringende Summenleistung für die mit dem Antriebs- und/oder Schweißumformer (2, 3) verbundenen Verbraucher im zentralen Hauptumformer (1) und/oder in einer Schweißsteuerung überwacht wird.

8. Vorrichtung nach Anspruch 7, **dadurch gekennzeichnet, dass** die Überwachung mittels einer Summenleistungsbegrenzungssteuerung erfolgt, wobei die Lasten nach Maßgabe einer Verwaltungsvorschrift so für den Betrieb verwaltet werden, dass die angeforderte Leistung aller am Hauptumformer (1) angeschalteten Lasten in Summe die zulässige Spitzenlast praktisch nicht überschreitet.

9. Vorrichtung nach einem der vorhergehenden Ansprüche, **dadurch gekennzeichnet, dass** der Hauptumformer (1) Mittel zur Beeinflussung von Oberwellen umfasst.

10. Vorrichtung nach einem der vorhergehenden Ansprüche, **dadurch gekennzeichnet, dass** ein Mittel zur pneumatischen und/oder hydraulischen Betätigung der Schweißzange umfasst ist.

11. Roboter, **dadurch gekennzeichnet, dass** er eine Widerstandsschweißvorrichtung nach einem der Ansprüche 1 bis 10 umfasst.
